# EUROPEAN PATENT APPLICATION

(11) **EP 4 738 845 A1**
(43) Date of publication of application: **06.05.2026**
(21) Application number: 24831068.2
(22) Date of filing: 30.06.2024
(51) Int. Cl.: H04N 21/43

(54) **SCREEN MIRRORING METHOD FOR MULTIMEDIA CONTENT, AND DEVICE AND STORAGE MEDIUM**

(30) Priority: 30.06.2023 CN 202310803868
(71) Applicant: Beijing Zitiao Network Technology Co., Ltd., Beijing 100190 (CN)
(72) Inventor: ZHU, Siyuan, Beijing 100028 (CN); WU, Di, Beijing 100028 (CN); XIE, Mengting, Beijing 100028 (CN); XIN, Aize, Beijing 100028 (CN)
(74) Representative: Isarpatent
(86) International application number: PCT/CN2024/102773
(87) International publication number: WO 2025/002444

(57) **Abstract**

Embodiments of the present disclosure provide a method, device and storage medium for screen projecting multimedia content. A method includes: playing first multimedia content in a playback window of a current device; displaying, in response to a trigger instruction, a first panel with a first screen projecting control being displayed on the first panel; screen projecting, in response to a trigger instruction for the first screen projecting control, the first multimedia content to a target device for playing; and displaying a second screen projecting control in the playback window. The starting of a creen projecting mode is realized based on the first screen projecting control, the first multimedia content is screen projected, and the second screen projecting control is displayed in the playback window. Thus the screen projecting can be conveniently and quickly controlled subsequently based on the second screen projecting control, the screen projecting operation is simplified, the personalized screen projecting requirement of the user can be met, and the screen projecting experience of the user is improved.

## Description

This application claims the benefit of Chinese Patent Application No. 202310803868.4, filed June 30, 2023, entitled "METHOD, DEVICE AND STORAGE MEDIUM FOR SCREEN PROJECTING MULTIMEDIA CONTENT," which is incorporated herein by reference in its entirety.

### FIELD

Embodiments of the present disclosure relate to the technical field of computer and network communication, in particular to a method, device and storage medium for screen projecting multimedia content.

### BACKGROUND

With the continuous development of network communication technologies, multimedia content may be shared on different playback devices. For example, a terminal device such as a mobile phone or a tablet computer may screen project a video played by the terminal device to a further device such as a television for playing, thereby bringing great convenience to daily life and work of people.

In the prior art, when playing the multimedia content, the terminal device may screen project the multimedia content to other devices based on a trigger for a screen projecting on/off. However, the operation of screen projecting the multimedia content has some cumbersome and brings inconvenience to the user's screen projecting operation.

### SUMMARY

Embodiments of the present disclosure provide a method, device and storage medium for screen projecting multimedia content, to simplify the operation of screen projecting multimedia content and meet personalized screen projecting requirements of a user.

According to a first aspect, embodiments of the present disclosure provide a method for screen projecting multimedia content, including: playing first multimedia content in a playback window of a current device; displaying, in response to a trigger instruction, a first panel with a first screen projecting control being displayed on the first panel; screen projecting, in response to a trigger instruction for the first screen projecting control, the first multimedia content to a target device for playing; and displaying a second screen projecting control in the playback window.

According to a second aspect, embodiments of the present disclosure provide an apparatus for screen projecting multimedia content, including: a playing unit configured to play first multimedia content in a playback window of a current device; a control unit configured to, display in response to a trigger instruction for the playback window, a first panel with a first screen projecting control being displayed on the first panel; and a screen projecting unit configured to screen project, in response to a trigger instruction for the first screen projecting control, the first multimedia content to a target device for playing; and display a second screen projecting control in the playback window.

According to a third aspect, embodiments of the present disclosure provide an electronic device, including: at least one processor and a memory. The memory stores computer executable instructions; and the at least one processor executes the computer executable instruction stored in the memory, to cause the at least one processor executes the multimedia content projection method according to the first aspect and the possible designs of the first aspect.

According to a fourth aspect, embodiments of the present disclosure provide a computer-readable storage medium. The computer-readable storage medium stores computer-executable instructions, and when a processor executes the computer-executable instructions, the processor implements the method for screen projecting multimedia content as described in the first aspect and various possible designs of the first aspect.

According to a fifth aspect, embodiments of the present disclosure provide a computer program product including computer executable instructions. When a processor executes the computer executable instruction, the processor implements the method for screen projecting multimedia content as described in the first aspect and various possible designs of the first aspect.

### BRIEF DESCRIPTION OF DRAWINGS

In order to more clearly illustrate the embodiments of the present disclosure or the technical solutions in the prior art, the accompanying drawings used in the description of the embodiments or the prior art will be briefly introduced below, and it will be apparent that the drawings in the following description are some embodiments of the present disclosure, and those skilled in the art may also obtain other drawings according to these drawings without creative labor.
FIG. 1a is an example diagram of an application scenario of a method for screen projecting multimedia content provided by an embodiment of the present disclosure;
FIG. 1b is an example diagram of an interface change of a method for screen projecting multimedia content provided by an embodiment of the present disclosure;
FIG. 2 is a schematic flowchart of a method for screen projecting multimedia content provided by an embodiment of the present disclosure;
FIG. 3 is a schematic flowchart of a method for screen projecting multimedia content provided by another embodiment of the present disclosure;
FIG. 4a is a schematic diagram of an interface change of a method for screen projecting multimedia content provided by an embodiment of the present disclosure;
FIG. 4b is a schematic diagram of an interface change of a method for screen projecting multimedia content provided by another embodiment of the present disclosure;
FIG. 5a is a schematic diagram of an interface change of a method for screen projecting multimedia content provided by another embodiment of the present disclosure;
FIG. 5b is a schematic diagram of an interface change of a method for screen projecting multimedia content provided by another embodiment of the present disclosure;
FIG. 6 is a schematic flowchart of a method for screen projecting multimedia content provided by another embodiment of the present disclosure;
FIG. 7 is a schematic diagram of an interface change of a method for screen projecting multimedia content provided by another embodiment of the present disclosure;
FIG. 8 is a schematic flowchart of a method for screen projecting multimedia content provided by another embodiment of the present disclosure;
FIG. 9 is a structural block diagram of an apparatus for screen projecting multimedia content provided by an embodiment of the present disclosure;
FIG. 10 is a schematic diagram of a hardware structure of an electronic device according to embodiments of the present disclosure.

### DETAILED DESCRIPTION

In order to make the objectives, technical solutions and advantages of the embodiments of the present disclosure clearer, the technical solutions in the embodiments of the present disclosure will be clearly and completely described below with reference to the accompanying drawings in the embodiments of the present disclosure. All other embodiments obtained by those skilled in the art based on the embodiments of the present disclosure without creative efforts shall fall within the scope of the present disclosure.

In the prior art, when playing the multimedia content, the terminal device may screen project the multimedia content to other devices based on a trigger for a screen projecting on/off. However, in the prior art, the screen projecting on/off is usually not disposed in the playback window of the multimedia content, but is disposed in a control panel. The control panel may be triggered and displayed through a long press on the playback window or other operation. When the user performs screen projecting of the multimedia content each time, they need to trigger the display of the control panel first, and then trigger the screen projecting on/off in the control panel. Especially, when the user needs to switch the multimedia content for screen projecting, the screen projecting process is complicated, and inconvenience is brought to the user's screen projecting operation.

In order to solve the technical problem, the present disclosure provides a method for screen projecting multimedia content. In a case where the current device does not screen project to a target device, a first panel is triggered to be displayed in a playback window of a current device, a first screen projecting control in the first panel is triggered to screen project first multimedia content currently being played in the playback window to the target device for playing, such that starting of a screen projecting mode is realized. After the screen projecting mode starts, a second screen projecting control is displayed in the playback window. The second screen projecting control is configured for controlling the screen projecting, such that the screen projecting can be conveniently and quickly controlled through the second screen projecting control. The screen projecting operation is simplified, the personalized screen projecting requirement of the user can be met, and the screen projecting experience of the user is improved.

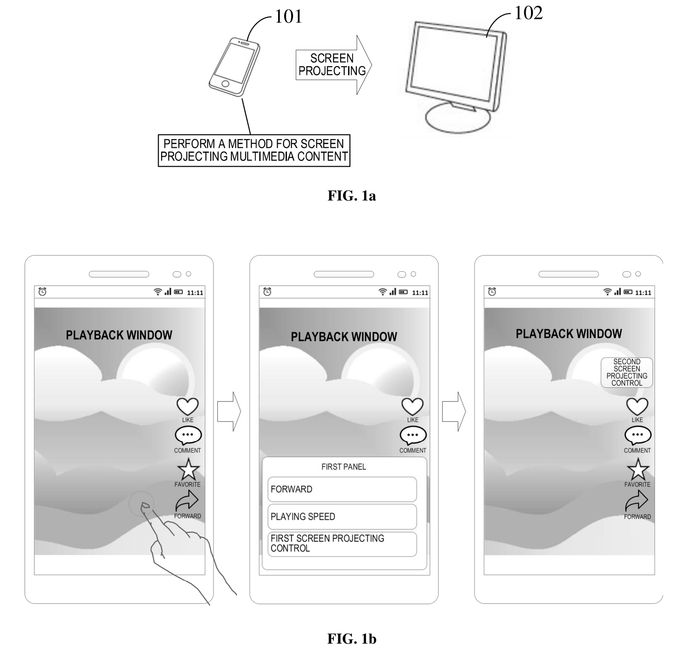

As shown in FIG. 1a, an application scenario of a method for screen projecting multimedia content provided in the present disclosure includes a current device and a target device, where the current device may be a terminal device such as a mobile phone or a tablet computer, and the target device is a device for screen projecting, such as a television. The current device may perform the method for screen projecting the multimedia content of the present disclosure, an interaction schematic diagram is as shown in FIG. 1b, and first multimedia content is played in a playback window of the current device. The playback window is a window in which the current device plays the multimedia content. If the playing of the multimedia content is full screen playing, the playback window may be a full-screen window. If the playing of the multimedia content is a non-full-screen play, the playback window may be a window of the actual playing of the multimedia content of the current device. The user may perform a long-press operation on the playback window (as shown in the left side of FIG. 1b), a first panel is displayed in the playback window, and a first screen projecting control is displayed on the first panel (as shown in the middle of FIG. 1b). Then the first screen projecting control is triggered, the first multimedia content is screen projected to the target device for playing, and a second screen projecting control is displayed in the playback window (as shown in the right side of FIG. 1b).

It should be noted that, both the user information and the data involved in this application are information and data authorized by a user or authorized by all parties, and collection, use and processing of related data needs to comply with relevant laws and regulations and standards of related countries and regions, and a corresponding operation portal is provided for a user to select authorization or decline.

The method for screen projecting the multimedia content of the present disclosure will be described in detail below with reference to detailed embodiments.

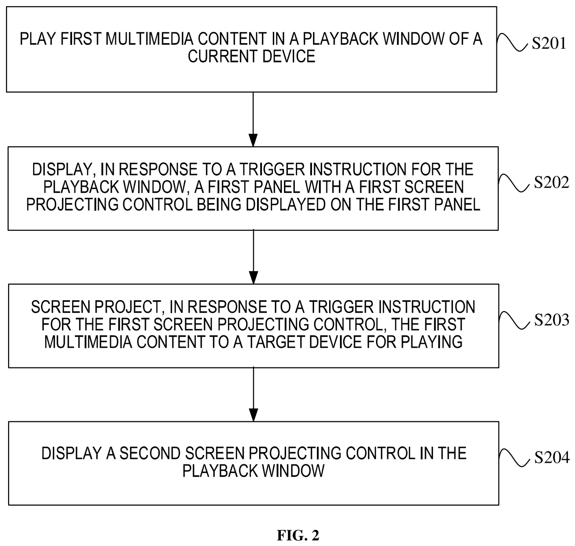

Referring to FIG. 2, FIG. 2 is a schematic flowchart of a method for screen projecting multimedia content provided by embodiments of the present disclosure. The method of the embodiments may be applied in a terminal device, and the method for screen projecting the multimedia content includes the following.

S201: First multimedia content is played in a playback window of a current device.

In the embodiments, the playback window of the current device may play any multimedia content, including but not limited to video, audio, picture, etc. The multimedia content may also be feed stream data. At a time, the current device does not perform screen projecting. The playback window is a window in which the current device plays the multimedia content, and if the playing of the multimedia content is full screen playing, the playback window may be a full-screen window, and if the playing of the multimedia content is non-full-screen playing, the playback window may be a window of the actual playing of the multimedia content of the current device.

S202, A first panel is displayed in response to a trigger instruction for the playback window, and a first screen projecting control is displayed on the first panel.

In the embodiments, when the current device (for example, the mobile device) does not perform screen projecting, if the user needs to screen project the first multimedia content on the current device to the target device such as a smart television and a display, the user may trigger the playback window to display the first panel. The first panel may be a control panel of the playback window, and the trigger operation includes but is not limited to a long press operation instruction, or other operation instructions such as a slide operation of a specific track, or a click instruction for a preset function button on the playback window. The first screen projecting control is displayed on the first panel. In addition, the first panel may further display including but not limited to a playing speed adjustment control, a forwarding control and the like (as shown in the middle of FIG. 1b). In a process of playing any multimedia content in the playback window, the first panel is usually not displayed in the playback window, that is, in a hidden state, and the first panel may be displayed in the playback window based on a trigger for the playback window.

The first panel may be a long-press panel or a sharing panel, for example, a long-press panel corresponding to the first multimedia content. The long-press panel may also display a further function control, such as an automatic play control and a bullet screen control. A sharing control may also be displayed on the sharing panel.

S203, The first multimedia content is screen projected to a target device for playing in response to a trigger instruction for the first screen projecting control.

In the embodiments, after the first panel is displayed in the playback window, the user may trigger the first screen projecting control in the first panel, to screen project the first multimedia content to the target device, such that the starting of the screen projecting mode is realized, that is, it is switched from not performing screen projecting to performing the screen projecting. The specific screen projecting process is not described herein again.

S204, A second screen projecting control is displayed in the playback window.

In the embodiments, after the first multimedia content is screen projected to the target device, that is, after the screen projecting mode starts, the user may have a demand for controlling the screen projecting, for example, selecting other multimedia content for screen projecting or performing playing control on the first multimedia content currently being screen projected. In order to facilitate the operation of the user, a second screen projecting control is displayed in the playback window, and the second screen projecting control is configured to control screen projecting. The second screen projecting control may be specifically applicable to one or more screen projecting control functions, such as selecting second multimedia content for screen projecting or performing playing control on the first multimedia content currently being screen projected, which is not limited in the embodiments. When the current device does not perform screen projecting, the second screen projecting control is not displayed in the playback window, thus the playback window is more concise, the covering on the playback window is reduced, and the user experience of viewing the multimedia content on the current device is improved. The second screen projecting control is displayed in the playback window only after the screen projecting mode starts, thus convenience is provided for user controlling the screen projecting, and the user does not need to trigger display of the first panel again, and not need to control the screen projecting in the first panel.

Embodiments of the present disclosure provide the method, device and storage medium for screen projecting multimedia content. First multimedia content is displayed in a playback window of a current device. In response to a trigger instruction for the playback window, a first panel is displayed with a first screen projecting control being displayed on the first panel. In response to a trigger instruction for the first screen projecting control, the first multimedia content is screen projected to a target device for playing; and a second screen projecting control is displayed in the playback window. The screen projecting mode is started through the first screen projecting control, such that the first multimedia content is screen projected. The second screen projecting control is displayed in the playback window, such that the screen projecting can be conveniently and quickly controlled based on the second screen projecting control, thus the screen projecting operation is simplified, the personalized screen projecting requirement of the user can be met, and the screen projecting experience of the user is improved.

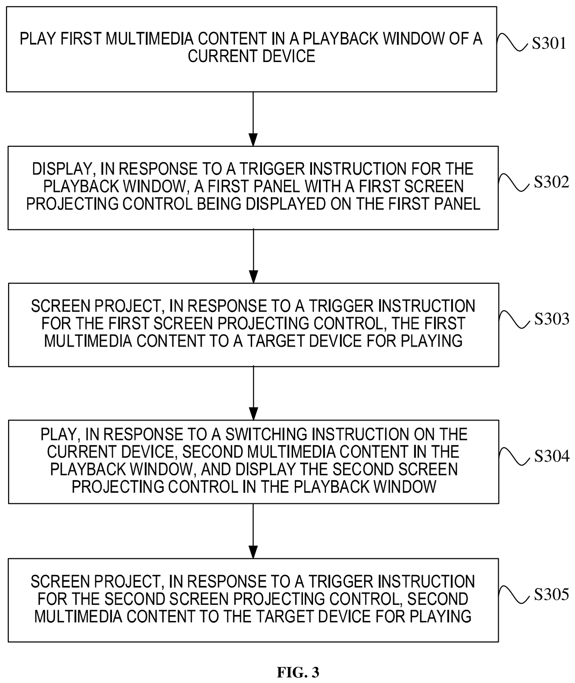

Based on the foregoing embodiments, as shown in FIG. 3, FIG. 3 is a schematic flowchart of a method for screen projecting multimedia content according to another embodiment of the present disclosure. The method for screen projecting multimedia content includes the following.

S301, First multimedia content is displayed in a playback window of a current device.

S302, A first panel is displayed in response to a trigger instruction for the playback window, and a first screen projecting control is displayed on the first panel.

S303, The first multimedia content is screen projected to a target device for playing in response to a trigger instruction for the first screen projecting control.

In the embodiments, S301 to S303 are the same as S201 to S203, and S204 is specifically as follows when the second screen projecting control is displayed in the playback window.

S304: In response to a switching instruction on the current device, second multimedia content is played in the playback window, and the second screen projecting control is displayed in the playback window.

In the embodiments, when the first multimedia content is screen projected to the target device for playing, the second screen projecting control is not displayed in the playback window of the current device. In order to ensure that the current device can be used for continuing viewing of other multimedia content or a selection of the multimedia content to be screen-projected, the multimedia content may be kept playing on the target device and based on this switching of multimedia content may be performed on the current device. After the switching of multimedia content is performed on the current device, the second screen projecting control is displayed in the playback window.

Specifically, the user may perform the switching of multimedia content on the current device. For example, for feed stream data, multimedia content may be switched based on a sliding up or down (or sliding left or right) operation. Corresponding switching operations may be used for other types of multimedia content. In response to the switching instruction, the current device plays the second multimedia content on the current device and the target device keeps playing the first multimedia content. Keeping the target device to continue playing the first multimedia content is to control the current device to not directly screen project the switched second multimedia content to the target device when the switching of multimedia content occurs, or control that the target device does not interact with the current device when the switching of multimedia content occurs. The first multimedia content continues to be played on the target device, and the switched second multimedia content is played on the current device, such that the switching of multimedia content on the current device does not affect the screen projecting state on the target device.

When the second multimedia content is switched for playing on the playback window of the current device, the second screen projecting control may be displayed in the playback window, where the second screen projecting control is configured to screen project the second multimedia content to the target device for playing when triggered, thereby facilitating the user to personalize and select the content for screen projecting.

Further, after displaying the second screen projecting control in the playback window, the method may further include the following.

S305, In response to a trigger instruction for the second screen projecting control, the second multimedia content is screen projected to the target device for playing.

In the embodiments, if the user wants to screen project the second multimedia content, the second screen projecting control may be triggered, and then the second multimedia content is screen projected to the target device for playing, without a trigger for the display of the first panel and then a trigger for the first screen projecting control in the first panel.

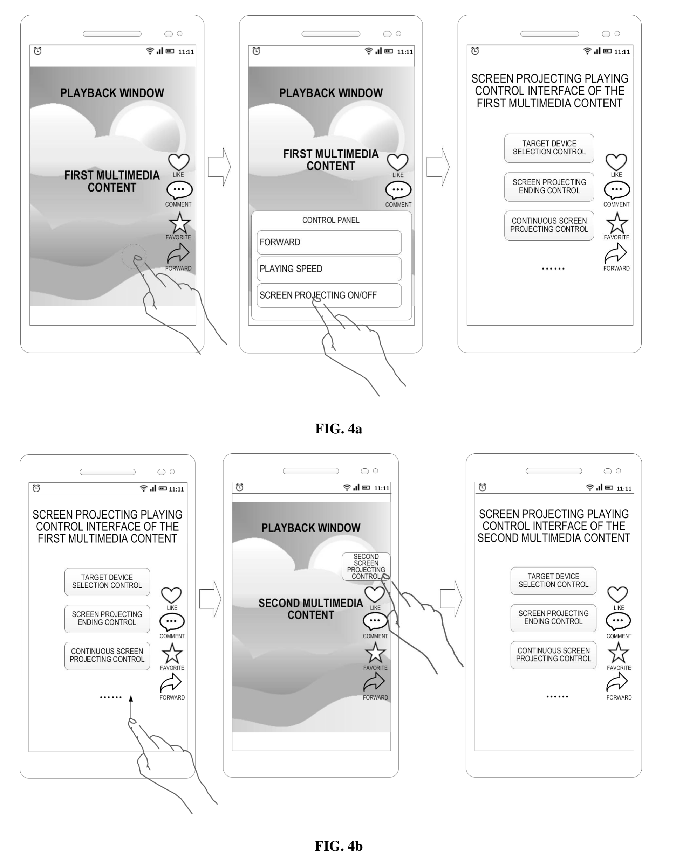

Optionally, after the current device screen projects the first multimedia content to the target device for playing, before the switching of multimedia content is performed, a screen projecting playing control interface of the first multimedia content may be displayed in the current device (as shown in the interface at the right side of FIG. 4a).That is, after the current device performs the screen projecting operation on the first multimedia content, the playing of the first multimedia content in the playback window of the current device is switched to the display of the screen projecting playing control interface of the first multimedia content in the playback window of the current device. The screen projecting playing control interface includes, but is not limited to, a target device selection control, a screen projecting ending control, a continuous screen projecting control (for continuously screen projecting a plurality of pieces of multimedia contents according to a playlist of the current device), a playing speed adjustment control, a playing progress adjustment control, an image quality adjustment control, and the like. Optionally, the screen projecting playing control interface may further include a control that is originally present in the playback window of the first multimedia content such as a comment control, favorite control, like control and forward control, such that the user can continue to comment, favorite, like and forward the first multimedia content on the current device. When the user needs to perform the switching of multimedia content on the current device, as shown in FIG. 4b, similar to the usual sliding operation such as up-and-down sliding or left-right sliding, in the embodiments, the sliding operation may be performed on the screen projecting playing control interface of the first multimedia content (as shown in the interface diagram in the leftmost side of FIG. 4b). The sliding operation may be sliding up-and-down or sliding left-and-right. The current device responds to a sliding operation (such as an up-down sliding) instruction in the screen projecting playing control interface of the first multimedia content, and the current device switches from displaying the screen projecting playing control interface of the first multimedia content in the playback window to playing the second multimedia content in the playback window of the current device (as shown in the interface diagram in the middle of FIG. 4b), thereby implementing switching of the multimedia content on the current device; and displaying the second screen projecting control in the playback window of the second multimedia content. Optionally, the second screen projecting control may float on the playback window of the second multimedia content, and may be folded or hidden (for example, it may be folded or hidden after being expanded for a preset time, and may be unfolded again based on a trigger operation such as clicking or dragging). A user trigger for the second screen projecting control may cause the second multimedia content to be screen projected to the target device for playing, and the playback window of the current device may display the screen projecting playing control interface of the second multimedia content (as shown in the interface at the right side of FIG. 4b).

Optionally, in another optional embodiment, in response to a first type of sliding operation instruction in the screen projecting playing control interface of the first multimedia content, the current device switches from, on the playback window, displaying the screen projecting playing control interface of the first multimedia content to playing the second multimedia content. In response to a second type of sliding operation instruction in the screen projecting playing control interface of the first multimedia content (different from the first type of sliding operation instruction, for example, the first type of sliding operation is an up-down sliding instruction and the second type of sliding operation instruction is a left-right sliding instruction), the current device performs channel switching on the playback window, for example, switching from a current multimedia content channel to a shopping channel. Optionally, if the switched channel is another multimedia content channel, the second screen projecting control continues to be displayed in the playback window; and if the switched channel is not the multimedia content channel, the second screen projecting control may be hidden. When the multimedia content channel is switched back again, the second screen projecting control may be displayed again in the playback window. Certainly, if the channel after the switching is not a multimedia content channel, the second screen projecting control may continue to be displayed.

When the current device does not perform screen projecting, the playback window may not include the screen projecting control, such that the playback window is more concise, the covering on the playback window is reduced, and the user experience of viewing the multimedia content on the current device is improved. When the user needs to screen project the first multimedia content, the first panel is triggered to be displayed based the long press on the playback window or a further operation, and the first screen projecting control in the first panel is triggered to cause the first multimedia content to be screen projected, such that the starting of screen projecting mode is realized. After the screen projecting is started, the second screen projecting control is displayed in the playback window only after the switching of multimedia content occurs on the current device, and the switching of the multimedia content on the current device does not affect the continued playing of the first multimedia content on the target device. When the user needs to screen project the switched second multimedia content for playing, the second screen projecting control can be triggered without a trigger for display of the first panel and a trigger for the first screen projecting control, such that the screen projecting operation process is simplified. When the screen projecting playing of the second multimedia content after switching is not needed, the second screen projecting control may not be triggered. The user may continue playing the second multimedia content on the current device, or performing the switching of multimedia content. The third multimedia content after switching is similar to the above process, and details are not described herein again. Certainly, if the user switches back to the first multimedia content, the screen projecting playing control interface of the first multimedia content may continue to be displayed on the playback window.

In an optional embodiment, the second screen projecting control includes at least two sub-controls, for example, a first sub-control and a second sub-control.

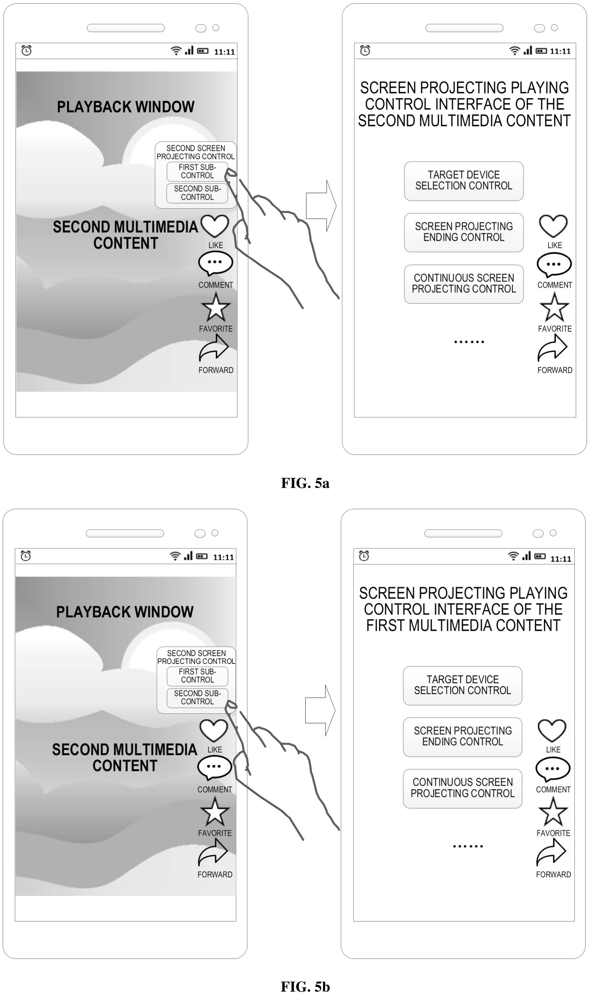

The first sub-control is configured to screen project the multimedia content currently being played in the playback window of the current device. As shown in FIG. 5a, if the second multimedia content is being played in the playback window of the current device and the user triggers the first sub-control in the second screen projecting control, the current device screen projects, in response to the trigger instruction for the first sub-control in the second screen projecting control, the second multimedia content currently being played by the current device to the target device for playing, and the screen projecting playing control interface of the second multimedia content may be displayed in the playback window of the current device.

The second sub-control is configured to switch, on the playback window of the current device, to a screen projecting playing control interface of the multimedia content currently being played by the target device. The user triggers the second sub-control in the second screen projecting control. In response to a trigger instruction for the second sub-control in the second screen projecting control, the current device switches from the playback window of the second multimedia content currently being played to the screen projecting playing control interface of the multimedia content currently being played by the target device. If the target device is playing the first multimedia content, after the user triggers the second sub-control in the second screen projecting control, the playback window of the current device switches from playing the second multimedia content to displaying the screen projecting playing control interface of the first multimedia content, as shown in FIG. 5b. In a continuous screen projecting mode, the target device automatically switches to next multimedia content in the playlist after playing the first multimedia content, and may also notify the current device when the target device switches to the next multimedia content. If the fourth multimedia content is being played after the target device switches, after the user triggers the second sub-control in the second screen projecting control, the playback window of the current device switches from playing the second multimedia content to displaying the screen projecting playing control interface of the fourth multimedia content.

Optionally, the first sub-control and the second sub-control in the second screen projecting control of the current device may be in a button form. Optionally, the second sub-control displays an identifier of the multimedia content currently being played by the target device, for example, an image of the poster of the multimedia content, a first-page image of the multimedia content, and the like, such that the user can determine which multimedia content is currently played by the target device by observing the identifier in the second sub-control.

In another optional embodiment, the second screen projecting control of the current device may be a control having a function same as the first sub-control. When the user triggers the second screen projecting control, the current device screen projects, in response to the trigger instruction for the second screen projecting control, the second multimedia content being played by the current device to the target device for playing.

In another optional embodiment, the second screen projecting control of the current device may be a control having a function same as the second sub-control. When the user triggers the second screen projecting control, the current device switches from, in response to the trigger instruction for the second screen projecting control and on the playback window of the current device, the second multimedia content currently being played to displaying the screen projecting playing control interface of the multimedia content currently being played by the target device. If the user needs to screen project the second multimedia content, the first panel may be triggered to be displayed based on a long-press operation, and the first screen projecting control may be triggered in the first panel to realize the screen projecting of the second multimedia content.

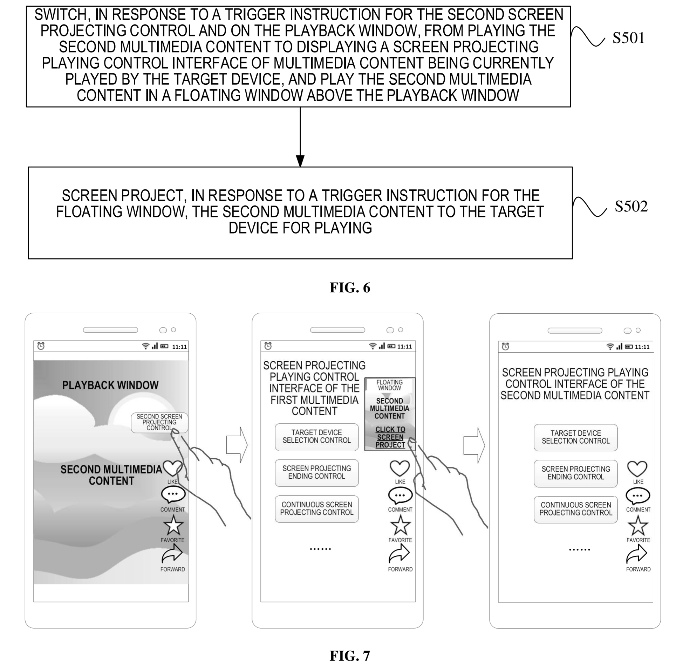

In another optional embodiment, as shown in FIG. 6, screen projecting in response to a trigger instruction for the second screen projecting control, the second multimedia content to the target device for playing at S305 may include:
S501, switching from, in response to the trigger instruction for the second screen projecting control and on the playback window, playing the second multimedia content to displaying a screen projecting playing control interface of multimedia content currently being played by the target device, and playing the second multimedia content in a floating window on the playback window;
S502, screen projecting, in response to a trigger instruction for the floating window, the second multimedia content to the target device for playing.

In the embodiments, after the user triggers the second screen projecting control, the playback window returns to the screen projecting playing control interface of the multimedia content currently being played by the target device. That is, the playback window switches from playing the second multimedia content to displaying the screen projecting playing control interface of the multimedia content currently being played by the target device, as shown in FIG. 7. Assuming that the target device is playing the first multimedia content at this time, after the second screen projecting control is triggered in the playback window of the second multimedia content, the playback window switches from playing the second multimedia content to displaying the screen projecting playing control interface of the first multimedia content. The second multimedia content cannot be continuously displayed in the screen projecting playing control interface of the first multimedia content, thus it is inconvenient for the user to continue viewing the second multimedia content in the current device. Therefore, in the embodiments, the second multimedia content is played above the screen projecting playing control interface of the first multimedia content (for example, the interface schematic in the middle of FIG. 6) by using a floating window (for example, a small window), and the floating window is floating above the playback window.

When the second multimedia content is played in the floating window, if the user needs to screen project the second multimedia content to the target device, the user may trigger the floating window. The current device screen projects, in response to a trigger instruction the floating window, the second multimedia content to the target device for playing and the current device may display the screen projecting playing control interface of the second multimedia content. That is, in this case, the floating window has a function of the second screen projecting control in addition to a playing function. Certainly, a control for triggering screen projecting may also be provided.

In order for the user to know that the screen projecting can be triggered by triggering the floating window, when the second multimedia content is played in the floating window in response to the trigger instruction for the second screen projecting control, the second screen projecting control may be transformed into the floating window through a specific animation effect. When the second multimedia content is played in the floating window, prompt information may also be displayed in the floating window to prompt the user that the screen projecting can be realized by triggering the floating window. For example, the prompt information may be "click to screen project", "click to screen project the current multimedia content", and the like.

Further, after the user triggers the floating window to screen project the second multimedia content to the target device for playing, the floating window may also be closed. Certainly, the floating window may not be closed, that is, the second multimedia content is played in the target device and in the floating window of the current device at the same time, such that the user may conveniently perform playing control of the screen projecting. Optionally, it may also be ensured that the play progress of playing the second multimedia content in the floating window is the same as the play progress of the second multimedia content played by the target device, such that the user can perform the playing control of the screen projecting on the target device according to the second multimedia content in the floating window above the screen projecting playing control interface.

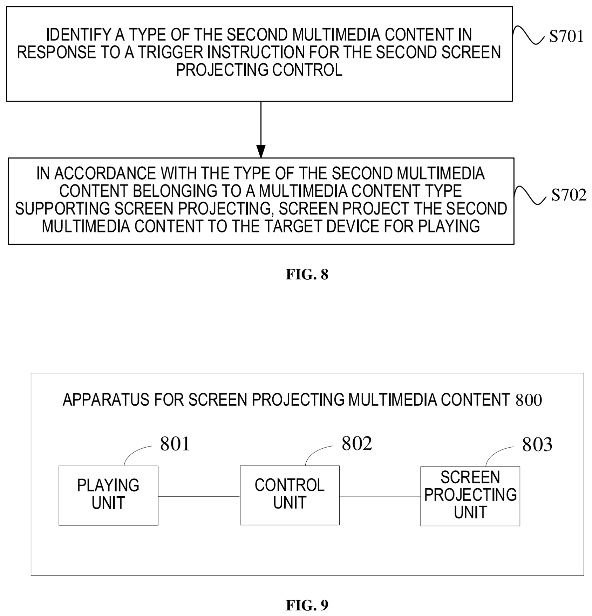

Based on any one of the foregoing embodiments, as shown in FIG. 8, in response to a trigger instruction for the second screen projecting control, projecting the second multimedia content to the target device for playing at S202 includes:
S701, identifying a type of the second multimedia content in response to a trigger instruction for the second screen projecting control;
S702, screen projecting the second multimedia content to the target device for playing in accordance with the type of the second multimedia content belonging to a multimedia content type supporting screen projecting.

In the embodiments, not all of the multimedia content may be screen projected. For some preset types of multimedia content, screen projecting cannot be performed. Thus, after the second screen projecting control is triggered, the type of the second multimedia content is identified, and if the type of the second multimedia content belongs to the multimedia content type supporting screen projecting, the second multimedia content is screen projected to the target device for playing. Otherwise, if the type of the second multimedia content does not belong to the multimedia content type that does not support screen projecting, the second multimedia content is stopped to be screen projected to the target device, and prompt information that the second multimedia content does not support screen projecting is displayed in the current device.

Corresponding to the method for screen projecting multimedia content in the foregoing embodiments, FIG. 9 is a structural block diagram of an apparatus for screen projecting multimedia content according to embodiments of the present disclosure. For ease of illustration, only portions related to embodiments of the present disclosure are shown. Referring to FIG. 9, the apparatus 800 for screen projecting multimedia content includes a playing unit 801, a control unit 802, and a screen projecting unit 803.

The playing unit 801 is configured to play first multimedia content in a playback window of a current device.

The control unit 802 is configured to play first multimedia content in a playback window of a current device.

The screen projecting unit 803 is configured to screen project, in response to a trigger instruction for the first screen projecting control, the first multimedia content to a target device for playing; and display a second screen projecting control in the playback window.

In one or more embodiments of the present disclosure, the screen projecting unit 803 displaying the second screen projecting control in the playback window includes:
playing second multimedia content in the playback window in response to a switching instruction on the current device, and displaying the second screen projecting control in the playback window.

In one or more embodiments of the present disclosure, the screen projecting unit 803 is further configured to:
screen project, in response to a trigger instruction for the second screen projecting control, the second multimedia content to the target device for playing.

In one or more embodiments of the present disclosure, after screen projecting the first multimedia content to the target device for playing in response to the trigger instruction for the first screen projecting control, the screen projecting unit 803 is further configured to:
display, in the playback window, a screen projecting playing control interface of the first multimedia content; and
play the second multimedia content in the playback window in response to the switching instruction on the current device includes:
   switching, in response to a sliding operation instruction in the screen projecting playing control interface of the first multimedia content and on the playback window, from displaying the screen projecting playing control interface of the first multimedia content to playing the second multimedia content.

In one or more embodiments of the present disclosure, the second screen projecting control includes at least two sub-controls;
when the screen projecting unit 803 screen projects the second multimedia content to the target device for playing in response to the trigger instruction for the second screen projecting control, the screen projecting unit 803 is configured to:
screen project, in response to a trigger instruction for a first sub-control of the at least two sub-controls, the second multimedia content to the target device for playing.

In one or more embodiments of the present disclosure, the screen projecting unit 803 is further configured to:
display, in the current device, a screen projecting playing control interface of the second multimedia content with the second multimedia content being screen projected to the target device for playing.

In one or more embodiments of the present disclosure, the screen projecting unit 803 is further configured to:
switch, in response to a trigger instruction for a second sub-control of the at least two sub-controls and on the playback window, from playing the second multimedia content to displaying a screen projecting playing control interface of multimedia content being currently played by the target device.

In one or more embodiments of the present disclosure, an identifier of multimedia content being currently played by the target device is displayed in the second sub-control.

In one or more embodiments of the present disclosure, the screen projecting unit 803 is further configured to:
switch, in response to a trigger instruction for the second screen projecting control and on the playback window, from playing the second multimedia content to displaying a screen projecting playing control interface of multimedia content being currently played by the target device.

In one or more embodiments of the present disclosure, when screen projecting the second multimedia content to the target device for playing in response to the trigger instruction for the second screen projecting control, the screen projecting unit 803 is configured to:
switch, in response to the trigger instruction for the second screen projecting control and on the playback window, from playing the second multimedia content to displaying a screen projecting playing control interface of multimedia content being currently played by the target device, and playing the second multimedia content in a floating window above the playback window;
screen project the second multimedia content to the target device for playing in response to a trigger instruction for the floating window.

In one or more embodiments of the present disclosure, when playing the second multimedia content in the floating window above the playback window, the screen projecting unit 803 is configured to:
transform the second screen projecting control into the floating window, playing the second multimedia content in the floating window, and displaying prompt information in the floating window, the prompt information being configured for prompting of screen projecting the second multimedia content by triggering the floating window.

In one or more embodiments of the present disclosure, the screen projecting unit 803 is further configured to:
close the floating window after screen projecting the second multimedia content to the target device for playing.

In one or more embodiments of the present disclosure, when screen projecting the second multimedia content to the target device for playing in response to the trigger instruction for the second screen projecting control, the screen projecting unit 803 is configured to:
identify a type of the second multimedia content in response to a trigger instruction for the second screen projecting control;
screen project the second multimedia content to the target device for playing in accordance with the type of the second multimedia content belonging to a multimedia content type supporting screen projecting.

In one or more embodiments of the present disclosure, the screen projecting playing control interface includes at least one of the following:
a target device selection control, a screen projecting ending control, a continuous screen projecting control, a playing speed adjustment control, a playing progress adjustment control, or an image quality adjustment control.

The apparatus provided in the embodiments may be configured to perform the technical solutions in the foregoing method embodiments, and implementation principles and technical effects thereof are similar, and details are not described herein again in this embodiment.

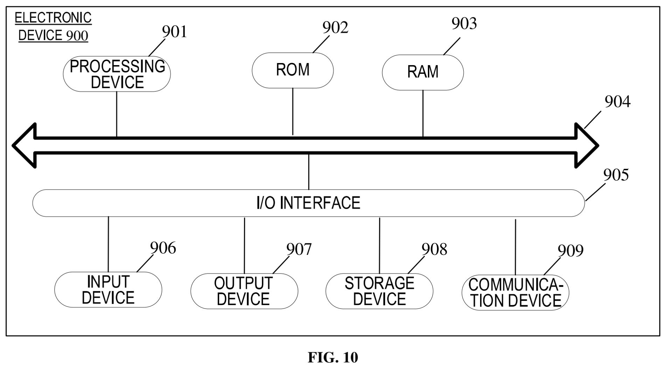

FIG. 10 shows a schematic structural diagram of an electronic device 900 suitable for implementing embodiments of the present disclosure, and the electronic device 900 may be a terminal device or a server. The terminal device may include, but is not limited to, a mobile terminal such as a mobile phone, a notebook computer, a digital broadcast receiver, a personal digital assistant (PDA), a tablet computer (PAD), a portable multimedia player (PMP), an in-vehicle terminal (for example, an in-vehicle navigation terminal), and a fixed terminal such as a digital TV, a desktop computer, or the like. The electronic device shown in FIG. 10 is merely an example, and should not impose any limitation on the functions and scope of use of the embodiments of the present disclosure.

As shown in FIG. 10, the electronic device 900 may include a processing device (for example, a central processing unit, a graphics processor, etc.) 901, which may perform various appropriate actions and processing according to a program stored in a read only memory (ROM) 902 or a program loaded into a random access memory (RAM) 903 from a storage device 908. In the RAM 903, various programs and data required by the operation of the electronic device 900 are also stored. The processing device 901, the ROM 902, and the RAM 903 are connected to each other through a bus 904. Input / output (I / O) interface 905 is also connected to bus 904.

Generally, the following devices may be connected to the I / O interface 905: an input device 906 including, for example, a touch screen, a touch pad, a keyboard, a mouse, a camera, a microphone, an accelerometer, a gyroscope, etc. ; an output device 907 including, for example, a liquid crystal display (LCD), a speaker, a vibrator, etc. ; a storage device 908 including, for example, a magnetic tape, a hard disk, etc. ; and a communication device 909. The communication device 909 may allow the electronic device 900 to communicate wirelessly or wired with other devices to exchange data. While FIG. 10 shows an electronic device 900 having various devices, it should be understood that it is not required to implement or have all illustrated devices. More or fewer devices may alternatively be implemented or provided.

In particular, according to embodiments of the present disclosure, the process described above with reference to the flowchart may be implemented as a computer software program. For example, embodiments of the present disclosure include a computer program product comprising a computer program embodied on a computer readable medium, the computer program comprising program code for performing the method shown in the flowchart. In such embodiments, the computer program may be downloaded and installed from the network through the communication device 909, or installed from the storage device 908, or from the ROM 902. When the computer program is executed by the processing apparatus 901, the foregoing functions defined in the method of the embodiments of the present disclosure are performed.

It should be noted that the computer-readable medium described above may be a computer readable signal medium, a computer readable storage medium, or any combination of the foregoing two. The computer-readable storage medium may be, for example, but not limited to, an electrical, magnetic, optical, electromagnetic, infrared, or semiconductor system, device, or device, or any combination thereof. More specific examples of computer-readable storage media may include, but are not limited to, an electrical connection having one or more wires, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination of the foregoing. In the present disclosure, a computer-readable storage medium may be any tangible medium containing or storing a program that may be used by or in connection with an instruction execution system, apparatus, or device. In the present disclosure, a computer readable signal medium may include a data signal propagated in baseband or as part of a carrier, where the computer readable program code is carried. Such propagated data signals may take a variety of forms including, but not limited to, electromagnetic signals, optical signals, or any suitable combination of the foregoing. The computer readable signal medium may also be any computer readable medium other than a computer readable storage medium that may send, propagate, or transmit a program for use by or in connection with an instruction execution system, apparatus, or device. The program code embodied on the computer-readable medium may be transmitted with any suitable medium, including, but not limited to: wires, optical cables, RF (radio frequency), and the like, or any suitable combination of the foregoing.

The computer-readable medium described above may be included in the electronic device; or may be separately present without being assembled into the electronic device.

The computer-readable medium carries one or more programs, and when the one or more programs are executed by the electronic device, the electronic device is enabled to perform the method shown in the foregoing embodiments.

Computer program code for performing the operations of the present disclosure may be written in one or more programming languages, including object oriented programming languages, such as Java, Smalltalk, C + +, and conventional procedural programming languages, such as the "C" language or similar programming languages. The program code may execute entirely on a user computer, partially on a user computer, as a stand-alone software package, partially on a user computer, partially on a remote computer, or entirely on a remote computer or server. In the case of a remote computer, the remote computer may be connected to the user computer through any kind of network, including a local area network (LAN) or a wide area network (WAN), or may be connected to an external computer (for example, using an Internet service provider for Internet connection).

The flowcharts and block diagrams in the figures illustrate architecture, functionality, and operation of possible implementations of systems, methods, and computer program products according to various embodiments of the present disclosure. In this regard, each block in the flowchart or block diagram may represent a module, program segment, or portion of code that includes one or more executable instructions for implementing the specified logical function. It should also be noted that in some alternative implementations, the functions noted in the blocks may also occur in a different order than that illustrated in the figures. For example, two consecutively represented blocks may actually be performed substantially in parallel, which may sometimes be performed in the reverse order, depending on the functionality involved. It is also noted that each block in the block diagrams and / or flowcharts, as well as combinations of blocks in the block diagrams and / or flowcharts, may be implemented with a dedicated hardware-based system that performs the specified functions or operations, or may be implemented in a combination of dedicated hardware and computer instructions.

The units involved in the embodiments of the present disclosure may be implemented in software, or may be implemented in hardware. For example, the first obtaining unit may be further described as "obtaining at least two units of Internet Protocol addresses".

The functions described above may be performed, at least in part, by one or more hardware logic components. For example, without limitation, exemplary types of hardware logic components that may be used include: field programmable gate arrays (FPGAs), application specific integrated circuits (ASICs), application specific standard products (ASSPs), system-on-a-chip (SOCs), complex programmable logic devices (CPLDs), and the like.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, devices, or devices, or any suitable combination of the foregoing. More specific examples of machine-readable storage media may include electrical connections based on one or more lines, portable computer disks, hard disks, random access memory (RAM), read-only memory (ROM), erasable programmable read-only memory (EPROM or Flash memory), optical fibers, portable compact disc read-only memory (CD-ROM), optical storage devices, magnetic storage devices, or any suitable combination of the foregoing.

In a first aspect, according to one or more embodiments of the present disclosure, a method for screen projecting multimedia content is provided, including:
playing first multimedia content in a playback window of a current device;
displaying, in response to a trigger instruction, a first panel with a first screen projecting control being displayed on the first panel;
screen projecting, in response to a trigger instruction for the first screen projecting control, the first multimedia content to a target device for playing;
displaying a second screen projecting control in the playback window.

According to one or more embodiments of the present disclosure, displaying the second screen projecting control in the playback window includes:
playing second multimedia content in the playback window in response to a switching instruction on the current device, and displaying the second screen projecting control in the playback window.

According to one or more embodiments of the present disclosure, the method further includes:
screen projecting, in response to a trigger instruction for the second screen projecting control, the second multimedia content to the target device for playing.

According to one or more embodiments of the present disclosure, after screen projecting the first multimedia content to the target device for playing in response to the trigger instruction for the first screen projecting control, the method further includes:
displaying, in the playback window, a screen projecting playing control interface of the first multimedia content;
playing the second multimedia content in the playback window in response to the switching instruction on the current device includes:
   switching, in response to a sliding operation instruction in the screen projecting playing control interface of the first multimedia content and on the playback window, from displaying the screen projecting playing control interface of the first multimedia content to playing the second multimedia content.

According to one or more embodiments of the present disclosure, the second screen projecting control includes at least two sub-controls; and
screen projecting the second multimedia content to the target device for playing in response to the trigger instruction for the second screen projecting control includes:
screen projecting, in response to a trigger instruction for a first sub-control of the at least two sub-controls, the second multimedia content to the target device for playing.

According to one or more embodiments of the present disclosure, the method further includes:
with the second multimedia content being screen projected to the target device for playing, displaying, in the current device, a screen projecting playing control interface of the second multimedia content.

According to one or more embodiments of the present disclosure, the method further includes:
switching, in response to a trigger instruction for a second sub-control of the at least two sub-controls and on the playback window, from playing the second multimedia content to displaying a screen projecting playing control interface of multimedia content being currently played by the target device.

According to one or more embodiments of the present disclosure, an identifier of multimedia content being currently played by the target device is displayed in the second sub-control.

According to one or more embodiments of the present disclosure, the method further includes:
switching, in response to a trigger instruction for the second screen projecting control and on the playback window, from playing the second multimedia content to displaying a screen projecting playing control interface of multimedia content being currently played by the target device.

According to one or more embodiments of the present disclosure, screen projecting the second multimedia content to the target device for playing in response to the trigger instruction for the second screen projecting control includes:
switching, in response to the trigger instruction for the second screen projecting control and on the playback window, from playing the second multimedia content to displaying a screen projecting playing control interface of multimedia content being currently played by the target device, and playing the second multimedia content in a floating window above the playback window;
screen projecting the second multimedia content to the target device for playing in response to a trigger instruction for the floating window.

According to one or more embodiments of the present disclosure, playing the second multimedia content in the floating window above the playback window includes:
transforming the second screen projecting control into the floating window, playing the second multimedia content in the floating window, and displaying prompt information in the floating window, the prompt information being configured for prompting of screen projecting the second multimedia content by triggering the floating window.

According to one or more embodiments of the present disclosure, the method further includes:
closing the floating window after screen projecting the second multimedia content to the target device for playing.

According to one or more embodiments of the present disclosure, screen projecting the second multimedia content to the target device for playing in response to the trigger instruction for the second screen projecting control includes:
identifying a type of the second multimedia content in response to a trigger instruction for the second screen projecting control;
screen projecting the second multimedia content to the target device for playing in accordance with the type of the second multimedia content belonging to a multimedia content type supporting screen projecting.

According to one or more embodiments of the present disclosure, the screen projecting playing control interface includes at least one of the following:
a target device selection control, a screen projecting ending control, a continuous screen projecting control, a playing speed adjustment control, a playing progress adjustment control, or an image quality adjustment control.

According to a second aspect, an apparatus for screen projecting multimedia content is provided according to one or more embodiments of the present disclosure, including:
a playing unit configured to play first multimedia content in a playback window of a current device;
a control unit configured to, display in response to a trigger instruction for the playback window, a first panel with a first screen projecting control being displayed on the first panel;
a screen projecting unit configured to screen project, in response to a trigger instruction for the first screen projecting control, the first multimedia content to a target device for playing; and display a second screen projecting control in the playback window.

According to one or more embodiments of the present disclosure, displaying the second screen projecting control in the playback window includes:
playing second multimedia content in the playback window in response to a switching instruction on the current device, and displaying the second screen projecting control in the playback window.

According to one or more embodiments of the present disclosure, the screen projecting unit is further configured to:
screen project, in response to a trigger instruction for the second screen projecting control, the second multimedia content to the target device for playing.

According to one or more embodiments of the present disclosure, after screen projecting the first multimedia content to the target device for playing in response to the trigger instruction for the first screen projecting control, the screen projecting unit is further configured to:
display, in the playback window, a screen projecting playing control interface of the first multimedia content;
play the second multimedia content in the playback window in response to the switching instruction on the current device includes:
   switch, in response to a sliding operation instruction in the screen projecting playing control interface of the first multimedia content and on the playback window, from displaying the screen projecting playing control interface of the first multimedia content to playing the second multimedia content.

According to one or more embodiments of the present disclosure, the second screen projecting control includes at least two sub-controls;
when screen projecting the second multimedia content to the target device for playing in response to the trigger instruction for the second screen projecting control, the screen projecting unit is configured to:
screen project, in response to a trigger instruction for a first sub-control of the at least two sub-controls, the second multimedia content to the target device for playing.

According to one or more embodiments of the present disclosure, the screen projecting unit is further configured to:
with the second multimedia content being screen projected to the target device for playing, display, in the current device, a screen projecting playing control interface of the second multimedia content.

According to one or more embodiments of the present disclosure, the screen projecting unit is further configured to:
switch, in response to a trigger instruction for a second sub-control of the at least two sub-controls and on the playback window, from playing the second multimedia content to displaying a screen projecting playing control interface of multimedia content being currently played by the target device.

According to one or more embodiments of the present disclosure, an identifier of multimedia content being currently played by the target device is displayed in the second sub-control.

According to one or more embodiments of the present disclosure, the screen projecting unit is further configured to:
switch, in response to a trigger instruction for the second screen projecting control and on the playback window, from playing the second multimedia content to displaying a screen projecting playing control interface of multimedia content being currently played by the target device.

According to one or more embodiments of the present disclosure, when screen projecting the second multimedia content to the target device for playing in response to the trigger instruction for the second screen projecting control, the screen projecting unit is configured to:
switch, in response to the trigger instruction for the second screen projecting control and on the playback window, from playing the second multimedia content to displaying a screen projecting playing control interface of multimedia content being currently played by the target device, and playing the second multimedia content in a floating window above the playback window;
screen project the second multimedia content to the target device for playing in response to a trigger instruction for the floating window.

According to one or more embodiments of the present disclosure, when playing the second multimedia content in the floating window above the playback window, the screen projecting unit is configured to:
transform the second screen projecting control into the floating window, playing the second multimedia content in the floating window, and displaying prompt information in the floating window, the prompt information being configured for prompting of screen projecting the second multimedia content by triggering the floating window.

According to one or more embodiments of the present disclosure, the screen projecting unit is further configured to:
close the floating window after screen projecting the second multimedia content to the target device for playing.

According to one or more embodiments of the present disclosure, when screen projecting the second multimedia content to the target device for playing in response to the trigger instruction for the second screen projecting control, the screen projecting unit is configured to:
identify a type of the second multimedia content in response to a trigger instruction for the second screen projecting control;
screen project the second multimedia content to the target device for playing in accordance with the type of the second multimedia content belonging to a multimedia content type supporting screen projecting .

According to one or more embodiments of the present disclosure, the screen projecting playing control interface includes at least one of the following:
a target device selection control, a screen projecting ending control, a continuous screen projecting control, a playing speed adjustment control, a playing progress adjustment control, or an image quality adjustment control.

According to a third aspect, an electronic device is provided according to one or more embodiments of the present disclosure, including: at least one processor and a memory,
the memory storing computer executable instructions;
the at least one processor executing the computer-executable instructions stored in the memory, to cause the at least one processor to perform the method for screen projecting multimedia content as described in the first aspect and various possible designs of the first aspect.

According to a fourth aspect, a computer-readable storage medium is provided according to one or more embodiments of the present disclosure, the computer-readable storage medium storing computer-executable instructions, and when a processor executes the computer-executable instructions, the processor implementing the method for screen projecting multimedia content as described in the first aspect and various possible designs of the first aspect.

According to a fifth aspect, a computer program product is provided according to one or more embodiments of the present disclosure, including computer executable instructions, and when a processor executes the computer executable instructions, the processor implementing the method for screen projecting multimedia content as described in the first aspect and various possible designs of the first aspect.

The above description is merely an illustration of the preferred embodiments of the present disclosure and the principles of the applied technology. It should be understood by those skilled in the art that the disclosure in the present disclosure is not limited to the technical solutions of the specific combination of the above technical features, and should also cover other technical solutions formed by any combination of the above technical features or their equivalent features without departing from the above disclosed concept, for example, technical solutions formed by mutually replacing the above features and the technical features (but not limited to them) disclosed in the present disclosure.

Further, while operations are depicted in a particular order, this should not be understood to require that these operations be performed in the particular order shown or in sequential order. In certain circumstances, multitasking and parallel processing may be advantageous. Likewise, while several specific implementation details are included in the discussion above, these should not be construed as limiting the scope of the present disclosure. Certain features described in the context of separate embodiments may also be implemented in combination in a single embodiment. Conversely, the various features described in the context of a single embodiment may also be implemented in multiple embodiments either individually or in any suitable subcombination.

Although the present subject matter has been described in language specific to structural features and / or methodological acts, it is to be understood that the subject matter defined in the appended claims is not necessarily limited to the specific features or acts described above. Rather, the specific features and acts described above are merely example forms of implementing the claims.

## Claims

1. A method for screen projecting multimedia content comprising:
playing first multimedia content in a playback window of a current device;
displaying, in response to a trigger instruction, a first panel with a first screen projecting control being displayed on the first panel;
screen projecting, in response to a trigger instruction for the first screen projecting control, the first multimedia content to a target device for playing;
displaying a second screen projecting control in the playback window.

2. The method of claim 1, wherein displaying the second screen projecting control in the playback window comprises:
playing second multimedia content in the playback window in response to a switching instruction on the current device, and displaying the second screen projecting control in the playback window.

3. The method of claim 2, wherein the method further comprises:
screen projecting, in response to a trigger instruction for the second screen projecting control, the second multimedia content to the target device for playing.

4. The method of claim 2, wherein the method further comprises: after screen projecting the first multimedia content to the target device for playing in response to the trigger instruction for the first screen projecting control,
displaying, in the playback window, a screen projecting playing control interface of the first multimedia content;
playing the second multimedia content in the playback window in response to the switching instruction on the current device comprises:
switching, in response to a sliding operation instruction in the screen projecting playing control interface of the first multimedia content and on the playback window, from displaying the screen projecting playing control interface of the first multimedia content to playing the second multimedia content.

5. The method of claim 3 or 4, wherein the second screen projecting control comprises at least two sub-controls;
screen projecting the second multimedia content to the target device for playing in response to the trigger instruction for the second screen projecting control comprises:
screen projecting, in response to a trigger instruction for a first sub-control of the at least two sub-controls, the second multimedia content to the target device for playing.

6. The method of claim 5, wherein the method further comprises: with the second multimedia content being screen projected to the target device for playing,
displaying, in the current device, a screen projecting playing control interface of the second multimedia content.

7. The method of claim 5, wherein the method further comprises:
switching, in response to a trigger instruction for a second sub-control of the at least two sub-controls and on the playback window, from playing the second multimedia content to displaying a screen projecting playing control interface of multimedia content being currently played by the target device.

8. The method of claim 7, wherein an identifier of multimedia content being currently played by the target device is displayed in the second sub-control.

9. The method of claim 2, wherein the method further comprises:
switching, in response to a trigger instruction for the second screen projecting control and on the playback window, from playing the second multimedia content to displaying a screen projecting playing control interface of multimedia content being currently played by the target device.

10. The method of claim 3 or 4, wherein screen projecting the second multimedia content to the target device for playing in response to the trigger instruction for the second screen projecting control comprises:
switching, in response to the trigger instruction for the second screen projecting control and on the playback window, from playing the second multimedia content to displaying a screen projecting playing control interface of multimedia content being currently played by the target device, and playing the second multimedia content in a floating window above the playback window;
screen projecting the second multimedia content to the target device for playing in response to a trigger instruction for the floating window.

11. The method of claim 10, wherein playing the second multimedia content in the floating window above the playback window comprises:
transforming the second screen projecting control into the floating window, playing the second multimedia content in the floating window, and displaying prompt information in the floating window, the prompt information being configured for prompting of screen projecting the second multimedia content by triggering the floating window.

12. The method of claim 10, wherein the method further comprises:
closing the floating window after screen projecting the second multimedia content to the target device for playing.

13. The method of claim 3 or 4, wherein screen projecting the second multimedia content to the target device for playing in response to the trigger instruction for the second screen projecting control comprises:
identifying a type of the second multimedia content in response to a trigger instruction for the second screen projecting control;
screen projecting the second multimedia content to the target device for playing in accordance with the type of the second multimedia content belonging to a multimedia content type supporting screen projecting.

14. The method of claim 4, wherein the screen projecting playing control interface comprises at least one of the following:
a target device selection control, a screen projecting ending control, a continuous screen projecting control, a playing speed adjustment control, a playing progress adjustment control, or an image quality adjustment control.

15. An apparatus for screen projecting multimedia content, comprising:
a playing unit configured to play first multimedia content in a playback window of a current device;
a control unit configured to, display in response to a trigger instruction for the playback window, a first panel with a first screen projecting control being displayed on the first panel;
a screen projecting unit configured to screen project, in response to a trigger instruction for the first screen projecting control, the first multimedia content to a target device for playing; and display a second screen projecting control in the playback window.

16. An electronic device, comprising: at least one processor and a memory;
the memory storing computer executable instructions;
the at least one processor executing the computer-executable instructions stored in the memory to cause the at least one processor to perform the method according to any one of claims 1 to 14.

17. A computer-readable storage medium storing computer-executable instructions, and when a processor executes the computer-executable instructions the processor implementing the method according to any of claims 1 to 14.

18. A computer program product comprising computer executable instructions, and when a processor executes the computer executable instructions the processor implementing the method according to any of claims 1 to 14.
